# EUROPÄISCHE PATENTSCHRIFT

(11) **EP 0 755 712 B1**
(45) Veröffentlichungstag und Bekanntmachung des Hinweises auf die Patenterteilung: **15.10.2003**
(21) Anmeldenummer: 96106710.5
(22) Anmeldetag: 27.04.1996
(51) Int. Cl.: B01D 46/24

(54) **Verfahren und Vorrichtung zum Reinigen von staubbeladenem Gas**
Process and device for cleaning dust-loaded gas
Procédé et installation pour la purification de gaz chargé de poussière

(30) Priorität: 26.07.1995 DE 19527311
(43) Veröffentlichungstag der Anmeldung: 29.01.1997
(73) Patentinhaber: Lurgi Energie und Entsorgung GmbH, 40880 Ratingen (DE)
(72) Erfinder: Dehn, Günther, 46485 Wesel (DE); Wegelin, Rüdiger, 44265 Dortmund (DE); Möllenhoff, Horst, Dr., 45470 Mülheim (DE); Krein, Joachim, 54298 Aach (DE)
(74) Vertreter: Radünz, Ingo, Dipl.-Ing.

(56) Entgegenhaltungen:
- EP-A- 0 433 637
- EP-A- 0 482 396
- EP-A- 0 572 063
- WO-A-95/02444
- US-A- 5 256 175

## Beschreibung

Die Erfindung betrifft eine Vorrichtung zum Reinigen von staubbeladenem, vorzugsweise heißem Gas mit Hilfe von keramischen, einseitig geschlossenen Filterkerzen gemäß dem Oberbegriff des Anspruches 1.

Bei dem in EP-A-0 572 063 beschriebenen Filter sind innerhalb eines Gehäuses übereinander mehrere selbständige Filteranordnungen angeordnet, die jeweils aus einer Lochplatte bestehen, an denen Filterkerzen aufgehängt sind. Unterhalb jeder Lochplatte ist eine mit einen Einlaß versehene Einlaßkammer und oberhalb jeder Lochplatte ist mit einem Auslaß versehene Auslaßkammer vorgesehen. Jede Einlaßkammer ist durch die Lochplatte, die Wand des Gehäuses und einen Trichter begrenzt. Jede Auslaßkammer ist durch die Lochplatte, die Wand des Gehäuses und den Trichter der darüber liegenden Filteranordnung begrenzt. Der Trichter dient der Abführung des Staubes, der an den Filterkerzen der darüber angeordneten Lochplatte abgeschieden wird.

Bei der gattungsgemäßen, aus der WO-A-95/02444 bekannten Filtervorrichtung sind die keramischen Filterkerzen horizontal und gruppenweise übereinander angeordnet. Diese Gruppen von Filterkerzen sind jeweils von einer Art Ascheablaufmantel umgeben, der bewirkt, daß der bei Abreinigung der Filterkerzen abgelöste Staub nicht erneut mit den Filterkerzen in Berührung kommt. Der Ascheablaufmantel weist einen zylindrischen und einen schräg verlaufenden oder einen konischen Abschnitt auf. Die Filterkerzen der unteren Gruppe können auch vertikal angeordnet und an Kanälen aufgehängt sein.

Aus der EP-B-0 433 637 ist ein Heißgasfilter mit keramischen Filterkerzen bekannt, die auf Sammelkanälen aufstehen oder an diesen aufgehängt sind. Diese Sammelkanäle sind parallel und mit seitlichem Abstand voneinander in mehreren Etagen übereinander innerhalb des Filterbehälters angeordnet. Die Sammelkanäle münden in eine Reingassammelkammer ein, die in dem Filterbehälter gebildet und an die ein Auslaßstutzen angeschlossen ist. Die Filterkerzen werden in zeitlichen Abständen mit Hilfe von Impulsgas abgereinigt. Der dabei von den Filterkerzen abgelöste Staub kann sich mit dem Rohgas auf dessen Weg zu den Filterkerzen in den unteren Etagen vermischen und wird sich an diesen Filterkerzen erneut anlagern. Diese Wiederanlagerung des Staubes und die dadurch notwendige doppelte oder dreifache Abreinigung des gleichen Staubes erhöht den Verbrauch an Impulsgas, welches sauber, unter Umständen besonders aufbereitet, auf jeden Fall aber auf hohen Druck gebracht werden muß, beträchtlich.

Bei den aus der EP-B-0 129 053 und der EP-A-0 482 396 bekannten Heißgasfiltern sind die Filterkerzen an mehreren übereinander angeordneten Lochplatten aufgehängt, an die sich jeweils eine konische Haube zum Abführen des Reingases anschließt. Zwar soll der von den Filterkerzen abgelöste Staub an der Schräge der darunter liegenden Haube entlang gleiten. Trotzdem wird der abgelöste Staub auch bei dieser Anordnung z. B. durch Verwirbelung unterhalb der Lochplatten von dem Rohgas mitgenommen und kann sich an den Filterkerzen der unteren Etagen erneut anlagern.

Der Erfindung liegt die Aufgabe zugrunde, die gattungsgemäße, mit in mehreren Etagen übereinander angeordneten Tragsammlern ausgerüstete Reinigungsvorrichtung so mit einem Ascheablaufmantel zu versehen, daß sich der abgelöste Staub nicht mehrfach an den Filterkerzen anlagern kann.

Diese Aufgabe wird bei einer gattungsgemäßen Vorrichtung erfindungsgemäß durch die kennzeichnenden Merkmale des Anspruches 1 gelöst. Vorteilhafte Ausgestaltungen der Erfindung sind in den Unteransprüchen angegeben.

Der erfindungsgemäße Ascheablaufmantel ist so an die in mehreren Etagen angeordneten Tragsammler angepaßt, daß eine Trennung von zu reinigendem Rohgas und abgelöstem Staub erreicht wird. Durch diese Trennung wird verhindert, daß sich der bereits einmal abgeschiedene Staub mit dem Rohgas vermischt und sich erneut an den Filterkerzen anlagert. Eine mehrfache Abreinigung des gleichen Staubes, die mit einem erhöhten Verbrauch an Impulsgas verbunden wäre, ist damit ausgeschlossen.

Mehrere Ausführungsbeispiele der Erfindung sind in der Zeichnung dargestellt und werden im folgenden näher erläutert. Es zeigen:
- Fig. 1: den Längsschnitt durch eine Vorrichtung zum Reinigen von Gas,
- Fig. 2: den Schnitt II-II nach Fig. 1,
- Fig. 3: die Einzelheit Z nach Fig. 1,
- Fig. 4: den Schnitt IV-IV nach Fig. 3
- Fig. 5: den Längsschnitt durch eine andere Vorrichtung zum Reinigen von Gas
- Fig. 6: bis 8 jeweils den Schnitt II-II nach Fig. 1 gemäß einer weiteren Ausführungsform,
- Fig. 9: den Längsschnitt durch eine andere Vorrichtung zum Reinigen von Gas und
- Fig. 10: den Längsschnitt durch eine weitere Vorrichtung zum Reinigen von Gas

Ein vorzugsweise zylindrischer, gegebenenfalls auf Druck ausgelegter und durch einen Deckel 27 verschlossener Filterbehälter 10 weist im Deckel 27 einen mittig angeordneten Einlaßstutzen 1 für das zu reinigenden Rohgas auf. Der Innenraum des Filterbehälters 10 stellt den Rohgasraum der Filtervorrichtung dar. Der untere Teil des Filterbehälters 10 ist als Trichter 16 ausgebildet, der mit einem Auslaßstutzen 17 für die Abführung des abgetrennten Staubes versehen ist. Unterhalb des Einlaßstutzen 1 ist eine Verteilvorrichtung 2, die mit schräg nach unten gerichteten Ablenkflächen versehen ist. Diese Verteilvorrichtung 2 lenkt den durch den Einlaßstutzen 1 mittig eintretenden Strom des Rohgases schräg nach unten und quer und von innen nach außen zu Filterkerzen 6.

Die Filterkerzen 6 sind keramische, einseitig offene. Hohlkörper, die mit ihrem offenen Ende auf geraden Tragsammlern 7 aufstehen. Die Tragsammler 7 sind parallel und mit Abstand voneinander angeordnet und münden in einen Reingassammelkanal 8 ein. Die Tragsammler 7 und der Reingassammelkanal 8 bilden mit den nachfolgenden Leitungen den Reingasraum der Filtervorrichtung. Der Reingassammelkanal 8 liegt in der gleichen Ebene mit den Tragsammlern 7. Die Filterkerzen 6 können auch mit einem das offene Ende umschließenden Bund versehen und über diesen Bund an den Tragsammlern 7 aufgehängt sein.

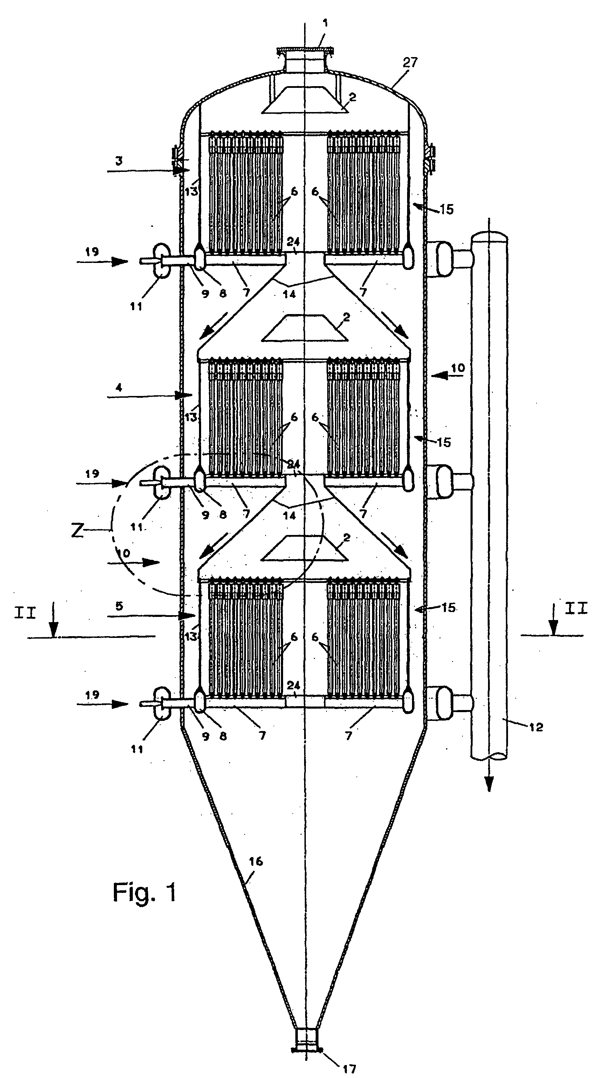

Die Reingassammelkanäle 8 mit den dazugehörenden Tragsammlern 7 und den angeschlossenen Filterkerzen 6 bildet ein Filtermodul. In dem Filterbehälter 10 sind mehrere solcher Filtermodule übereinander angeordnet werden. In der Fig. 1 sind drei solcher Filtermodule gezeigt, nämlich ein oberes Filtermodul 3, ein mittleres Filtermodul 4 und ein unteres Filtermodul 5, die jeweils eine Etage des Gesamtfilters bilden.

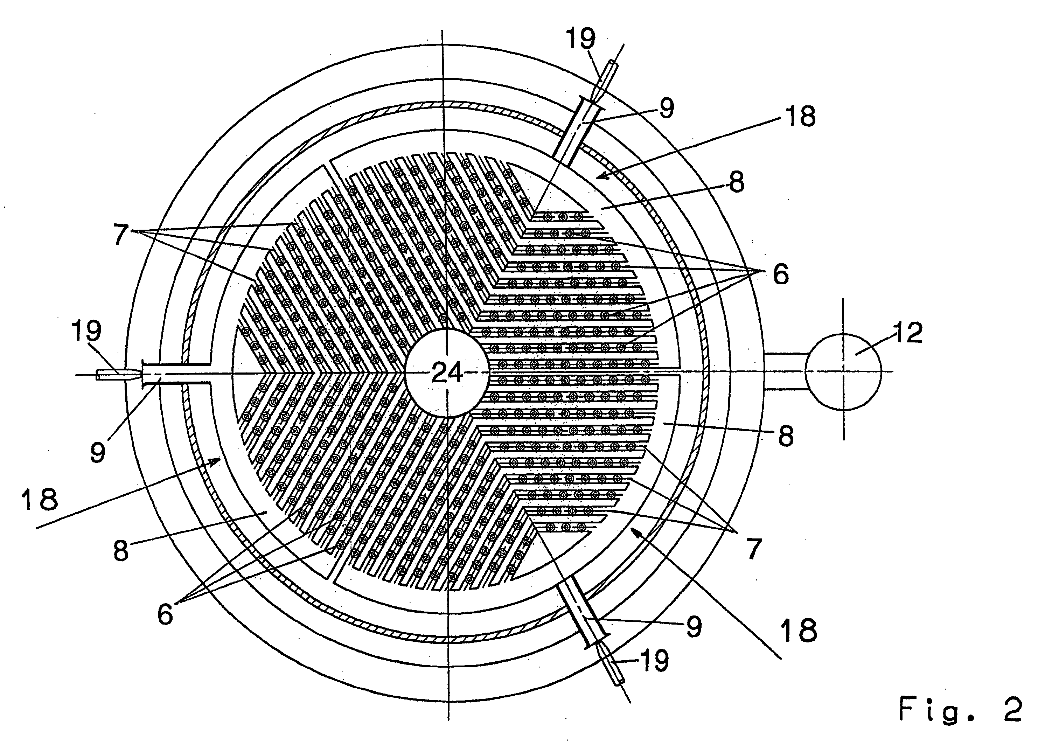

Jedes Filtermodul 3, 4, 5 ist in mehrere kreissektorartige Filtersegmente 18 aufgeteilt, die gasseitig voneinander getrennt sind. In der Mitte eines jeden Filtermoduls 3, 4, 5 verbleibt ein Raum, der von Tragsammlern 7 freigehalten ist und eine mittige Öffnung 24 bildet. Es können bis zu sechs oder mehr solcher Filtersegmente 18 vorgesehen werden, die jeweils gleich groß sind. Gemäß der Fig. 2 ist das Filtermodul 5 in drei Filtersegmente 18 aufgeteilt.

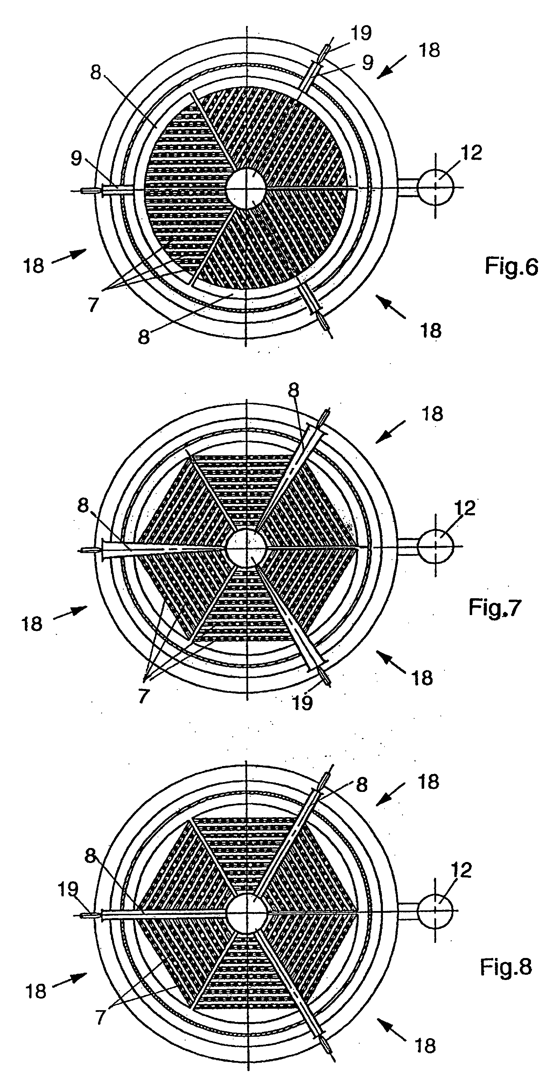

Die Tragsammler 7 eines jeden Filtersegments 18 sind mit einem separaten Reingassammelkanal 8 verbunden. Die Tragsammler 7 sind symmetrisch zu einer durch den Mittelpunkt des Filtersegments 18 verlaufende Linie angeordnet. Gemäß den Fig. 2 und 6 umgeben die Reingassammelkanäle 8 die Tragsammler 7 von außen und sind kreisringförmig ausgebildet. Dabei können die Tragsammler 7 V-förmig oder parallel zu der Symmetrieachse angeordnet sein. Die kreisringförmigen Reingassammelkanäle 8 sind mit einer mittig angeordneten Reingasaustrittsleitung 9 verbunden, die in der Symmetrieachse angeordnet sind. Diese Reingasaustrittsleitung 9 ist durch die Wand des Filterbehälters 10 nach außen geführt.

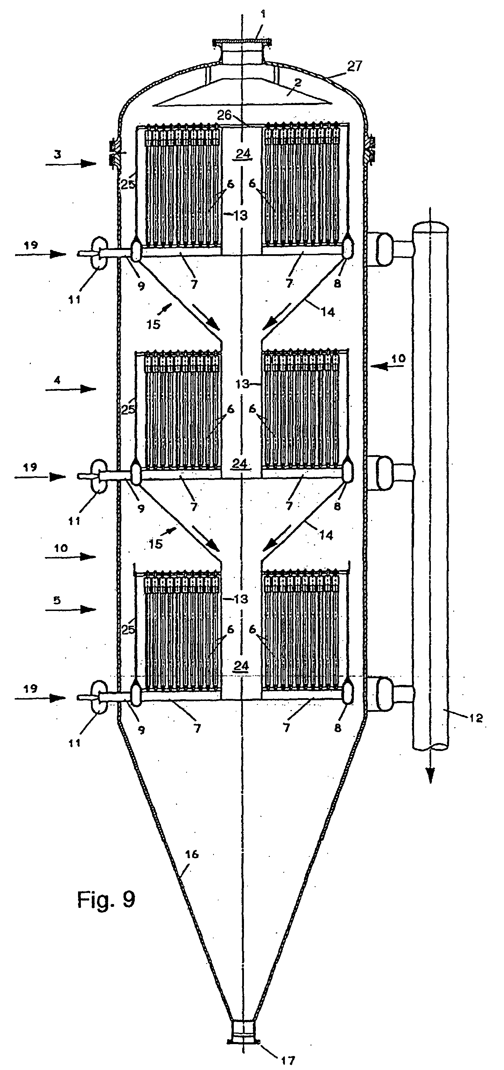

Gemäß den Fig. 6 und 7 sind die Reingassammelkanäle 8 entlang der Symmetrieachse des Filtersegments 18 angeordnet, wobei die Tragsammler 7 von beiden Seiten in den Reingassammelkanal 8 einmünden. Jeder dieser Reingassammelkanäle 8 ist nach außen durch die Wand des Filterbehälters 10 geführt. Der Strömungsquerschnitt der Reingassammelkanäle 8 vergrößert sich in Strömungsrichtung des Reingases in dem Maße, wie der Volumenstrom zunimmt. Die Vergrößerung des Strömungsquerschnittes kann in der Breite und/oder in der Höhe des Reingassammelkanals 8 vorgenommen werden.

Die nach außen geführten Reingasaustrittsleitungen 9 (Fig. 1, 2, 3, 6) oder Reingassammelkanäle 8 (Fig. 7, 8) münden in einen in der gleichen Ebene außerhalb des Filterbehälters 10 verlegten Reingasringsammler 11. Die Reingasringsammmler 11 sind an eine gemeinsame Reingasleitung 12 angeschlossen.

In die nach außen durch die Wand der Filterbehälters 10 ragenden Enden jeder Reingasaustrittsleitung 9 oder jedes Reingassammelkanals 8 ist eine Abreinigungslanze 19 gerichtet, über die zur Abreinigung der Filterkerzen 6 ein Impulsgas eingeblasen wird. Die Abreinigung erfolgt für jeden Filtersegment 18 einzeln.

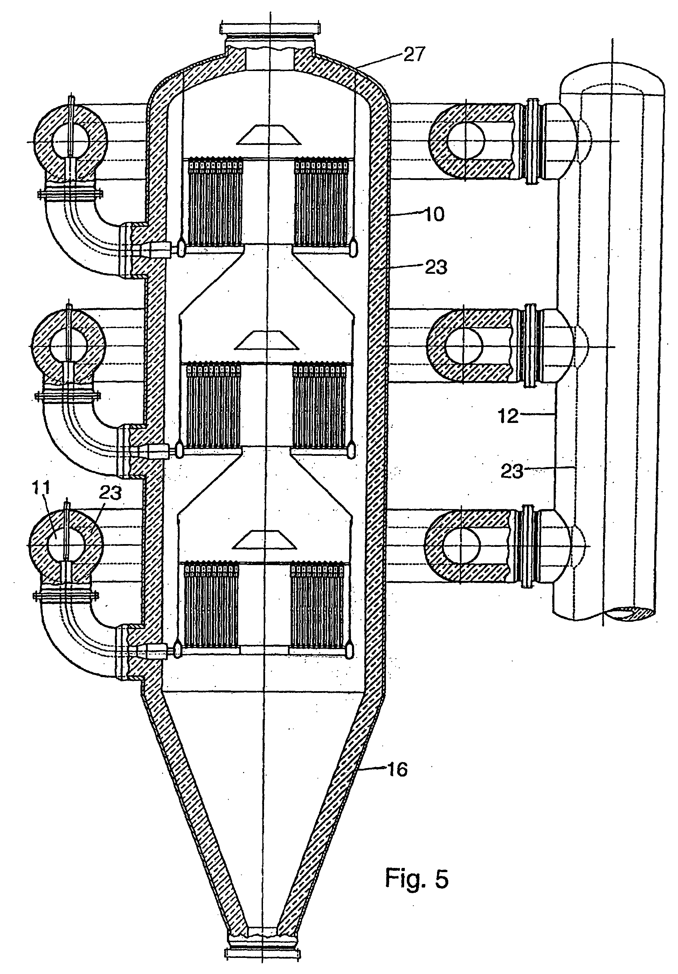

Wie in Fig. 5 gezeigt ist, können die Wand, der Deckel 27 und der Trichter 16 des Filterbehälters 10 sowie die Reingasringsammmler 11 und die Reingasleitung 12 auf der Innenseite mit einer feuerfesten Auskleidung 23 versehen sein.

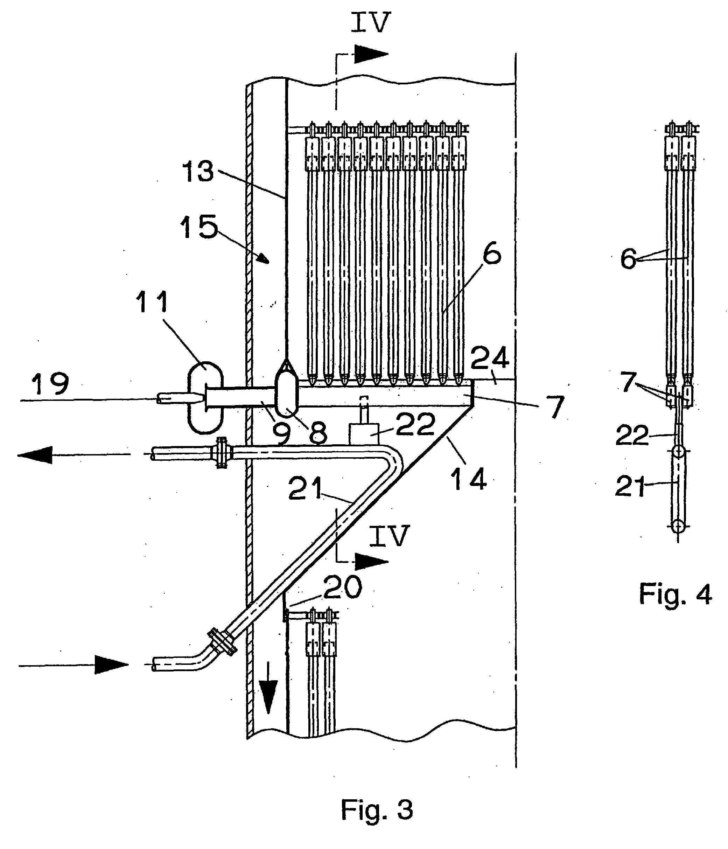

Jedes Filtersegment 18 eines Filtermoduls 3, 4, 5 ist einzeln an der Wand des Filterbehälters 10 über eine oder mehrere Stützkonstruktionen abgestützt. Die Stützkonstruktion ist als Wandkonsole ausgebildet, die gemäß Fig. 3 aus einem oder mehreren gewinkelten Rohrelementen 21 besteht. Die Rohrelemente 21 sind insbesondere bei der Verwendung als Heißgasfilter von einem Kühlmedium durchströmt. Die Stützkonstruktion kann auch mit einem Doppelmantel für das durchströmende Kühlmedium versehen werden.

Auf den als Stützkonstruktion dienenden Rohrelementen 21 ist ein Auflager 22 angeordnet, das aus einem senkrechten Steg besteht, der zwei seitliche Stege trägt. Auf den Stegen dieses Auflagers 22 liegen die Tragsammler 7 zweier benachbarten Filtersegmente 18 gleitend auf. Der Festpunkt für ein Filtersegment 18 wird auf den Durchtritt durch den Filterbehälter der jeweilige Reingasaustrittsleitung 9 oder des jeweiligen Reingassammelkanals 8 gelegt. Das einzelne Filtersegment 18 kann dadurch bei einem Temperaturanstieg auf den Auflagern 22 gleitend zur Behältermitte hin wachsen, ohne daß ein besonderer Kompensator, der bei hohen Temperaturen und hohen Differenzdrücken Probleme bereiten kann, notwendig wäre. Bei Betrieb des Filters mit heißen Gasen bis zu 1000 °c beeinflußt daher die Materialausdehnung durch eine Temperaturerhöhung nur das einzelne Filtersegment 18.

Jedes Filtermodul 4, 5 ist von dem darüber angeordneten Filtermodul 3, 4 von einem aus Blech bestehenden Ascheablaufmantel 15 getrennt. Dieser Ascheablaufmantel 15 enthält einen zylindrischen Abschnitt 13 und einen konischen Abschnitt 14 und überbrückt den Innenraum des Filterbehälters 10 zwischen zwei übereinander liegenden Filtermodulen 3, 4, 5. Bei der Ausführungsform gemäß den Fig. 1 und 2 umschließt der zylindrischen Abschnitt 13 des Ascheablaufmantels 15 die Filterkerzen 6 des betreffenden Filtermoduls 3, 4, 5 von außen und reicht mindestens bis zur Oberkante der Filterkerzen 6. Die Unterkante des Ascheablaufmantels 15 ist dicht auf den Reingassammelkanal 8 aufgeschweißt. Sind die Tragsammler 7, wie in den Fig. 7 und 8 gezeigt, angeordnet, so erfolgt der Anschluß des zylindrischen Abschnittes 13 an den äußeren Tragsammlern 7. Der konische Abschnitt 14 verengt sich nach oben und geht in die von den Tragsammlern 7 freigehaltene Öffnung 24 des darüber liegenden Filtermoduls 4, 3 über. Er ist an der aus den Rohrelementen 21 gebildeten Stützkonstruktion befestigt. Die Nahtstelle 20 zwischen dem zylindrischen Abschnitt 13 und dem konischen Abschnitt 14 ist überlappend und schiebend als Schiebeverbindung ausgeführt. Bei dem das obere Filtermodul 3 umschließenden Ascheablaufmantel 15 fehlt der konische Abschnitt 14. Statt dessen ist der zylindrische Abschnitt 13 an der Oberkante mit dem Deckel 27 oder der Wand des Filterbehälters 10 verbunden und kann an der Verbindungsstelle mit einer Schiebeverbindung versehen sein.

Der sich an den Filterkerzen 6 anlagernde Staub wird in zeitlichen Abständen mit Hilfe von Pulsgas, das kurzzeitig durch die Abreinigungslanzen 19 eingeblasen wird, von der Kerzenoberfläche abgelöst. Der abgelöste Staub wird an dem Ascheablaufmantel 15 vorbei durch den Spalt zwischen dem Ascheablaufmantel 15 und der Wand des Filterbehälters 10 entlang geführt und gelangt in den Trichter 16. Dabei kommt der abgelöste Staub nicht mehr mit dem Rohgas in Kontakt, da dieses auf der Innenseite des Ascheablaufmantels 15 den Filterkerzen 6 des jeweils darunter angeordneten Filtermoduls 4, 5 zuströmt. Ein Vermischen von bereits abgelösten Staub mit dem Rohgas auf dessen Weg zu den Filterkerzen 6 und eine Wiederanlagerung des gleichen Staubes ist nicht mehr möglich. Auf diese Weise wird eine große Menge an Pulsgas eingespart, das für die Abreinigung der Filterkerzen 6 notwendig ist und für diesen Zweck sauber, unter Umständen besonders aufbereitet, auf jeden Fall aber auf hohen Druck gebracht werden muß.

Der zwischen der Wand des Filterbehälters 10 und dem Ascheablaufmantel 15 gebildete Ringspalt für den Staubablauf kann klein gewählt werden. Die Gefahr einer Brückenbildung wird reduziert. Der Ascheablaufmantel 15 braucht nur mit einer geringen Wanddicke versehen zu sein, da auf beiden Seiten des Ascheablaufmantels 15 der gleiche Druck herrscht.

Durch den von oben kommenden mittigen Rohgasstrom und durch das sofortige auf jeder Höhe eines Filtermoduls 3, 4, 5 herausgeführte Reingas stellen sich symmetrische Strömungsverhältnisse des Rohgasstromes ein. Dies führt zu einer vergleichmäßigten Beaufschlagung aller Filterkerzen 6 mit Staub und somit zu einer weiteren Einsparung an für die. Abreinigung notwendigem Pulsgas.

Eine Variante des Ascheablaufmantels 15 ist in der Fig. 9 gezeigt. Hierbei ist der zylindrische Abschnitt 13 des Ascheablaufmantels 15 in dem von den Tragsammlern 7 freigehaltenen, die Öffnung 24 bildenden Raum angeordnet. Der zylindrische Abschnitt 13 begrenzt die Filterkerzen 6 eines Filtermoduls 3, 4, 5 von innen und ist mit den Tragsammlern 7 verbunden. Der sich an den zylindrischen Abschnitt 13 anschließende konische Abschnitt 14 erweitert sich nach oben und ist nach Fig. 9 mit den kreisringförmigen Reingassammelkanäle 8 des darüber angeordneten Filtermoduls 4, 5 verbunden. Der mittige freie Raum des oberen Filtermoduls 3 ist durch eine Platte 26 verschlossen. Die Filterkerzen 6 jedes Filtermoduls 3, 4, 5 sind außen von einem Leitmantel 25 umgeben. Die Wirkungsweise dieses Ascheablaufmantels 15 entspricht derjenigen des zuvor beschriebenen Ascheablaufmantels 15. Das durch den Einlaßstutzen 1 eintretende, zu reinigende Rohgas trifft senkrecht von oben auf die Filterkerzen 6 des oberen Filtermoduls 3. Ein weiterer Teil des Rohgases strömt nach unten und zwischen dem Ascheablaufmantel 15 und der Wand des Filterbehälters 10 den darunter angeordneten Filtermodulen 4, 5 zu. Dort trifft das Rohgas, geführt durch den Leitmantel 25 und den zylindrischen Abschnitt 13 des Ascheablaufmantels 15, senkrecht von oben auf die Filterkerzen 6 des betreffenden Filtermoduls 4, 5. Der durch die Abreinigung von den Filterkerzen 6 abgelöste Staub wird auf der Innenseite an dem Ascheablaufmantel 15 entlang und an den Filterkerzen 6 des darunter liegenden Filtermoduls 4, 5 vorbei geführt, ohne mit dem Rohgas noch einmal in Kontakt zu kommen.

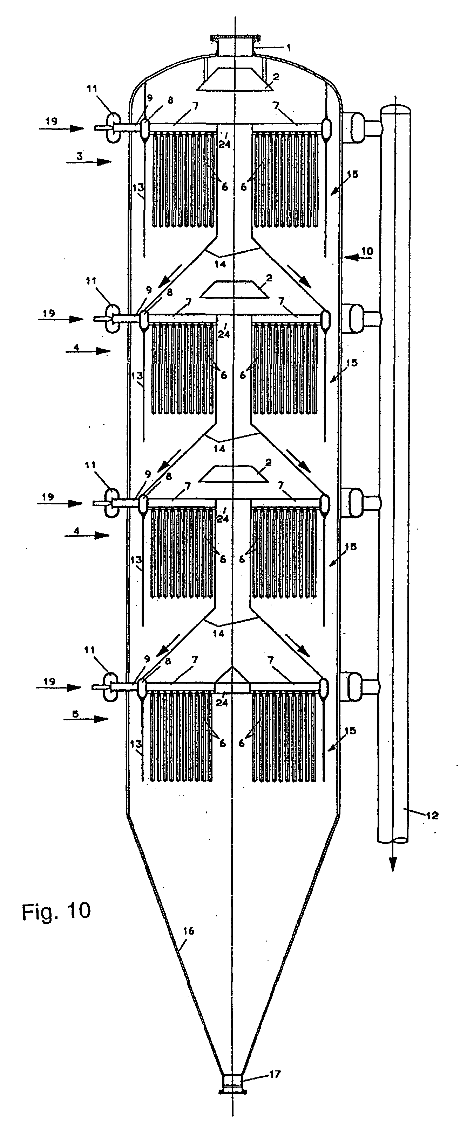

Das erfindungsgemäße Verfahren der getrennten Führung von zu reinigendem Rohgas und abgelöstem Staub kann auch in der in Fig. 10 dargestellten Filtervorrichtung durchgeführt werden. Bei dieser Filtervorrichtung sind die Filterkerzen 6 an den Tragsammlern 7 aufgehängt. Der die Filterkerzen 6 eines Filtermoduls von den Filterkerzen 6 des darüber angeordneten Filtermoduls trennende Ascheablaufmantel 15 besteht aus einem zylindrischen Abschnitt 13 und aus einem kegelstumpfförmigen, sich nach oben verengenden Abschnitt 14, die mit dem oder den betreffenden Reingassammelkanälen 8 verbunden sind. Die in Fig. 10 dargestellte Filtervorrichtung weist darüber hinaus die Eigenart auf, daß mehr als drei Filtermodule übereinander angeordnet sind. Denkbar ist auch eine Lösung für eine Filtervorrichtung, bei der die etagenförmig angeordneten Tragsammler, an die die Filterkerzen angeschlossen sind, über Tragelemente gemeinsam in dem Filterbehälter aufgehängt oder abgestützt sind.

## Patentansprüche

1. Vorrichtung zum Reinigen von staubbeladenem, vorzugsweise heißem Gas mit Hilfe von keramischen, einseitig geschlossenen Filterkerzen (6), die innerhalb eines Filterbehälters (10) in mehreren Etagen übereinander angeordnet und an mit seitlichem Abstand voneinander angeordnete Tragsammler (7) angeschlossen sind, wobei die Filterkerzen (6) einer Etage von den Filterkerzen (6) der darüber angeordneten Etage durch einen Ascheablaufmantel (15) getrennt sind, der aus einem zylindrischen Abschnitt. (13) und einem konischen Abschnitt (14) besteht und die Filterkerzen (6) von einer Seite umgibt, **dadurch gekennzeichnet, daß** der Ascheablaufmantel (15) von den Tragsammlern (7) der einen Etage bis zu den Tragsammlern (7) der anderen Etage reicht und mit diesen verbunden ist und daß im Zentrum jeder Etage ein von Tragsammlern (7) freier Raum verbleibt, in den der konischen Abschnitt (14) des Ascheablaufmantels (15) übergeht.

2. Vorrichtung nach Anspruch 1, **dadurch gekennzeichnet, daß** der zylindrische Abschnitt (13) des Ascheablaufmantels (15) die Filterkerzen (6) einer Etage von außen umgibt und daß der konische Abschnitt (14) sich nach oben verengt und in die mittige Öffnung (24) hineinragt, die in dem von den Tragsammlern (7) freigehaltenen Raum im Zentrum der darüber liegenden Etage gebildet ist.

3. Vorrichtung nach Anspruch 1, **dadurch gekennzeichnet, daß** der zylindrischen Abschnitt (13) des Ascheablaufmantels (15) die Filterkerzen (6) einer Etage von innen umgibt und daß der konische Abschnitt (14) sich nach oben erweitert und bis zu der außen liegenden Begrenzung der Tragsammler (7) in der darüber liegenden Etage reicht.

4. Vorrichtung nach einem der Ansprüche 1 bis 3, **dadurch gekennzeichnet, daß** der zylindrische Abschnitt (13) und der konische Abschnitt (14) des Ascheablaufmantels (15) über eine Verschiebeverbindung miteinander verbunden sind.

5. Vorrichtung nach einem der Ansprüche 1 bis 4, **dadurch gekennzeichnet, daß** der zylindrische Abschnitt (13) der obersten Etage mit der Wand oder dem Deckel (27) des Filterbehälters (10) verbunden ist.

## Claims

1. Device for cleaning dust-laden, preferably hot, gas with the aid of ceramic filter cartridges (6) which are closed at one end and which are arranged one above the other in several storeys within a filter container (10) and connected with support collectors (7) arranged at a lateral spacing from one another, wherein the filter cartridges (6) of one storey are separated from the filter cartridges (6) of the storey arranged thereabove by an ash discharge jacket (15) which consists of a cylindrical section (13) and a conical section (14) and surrounds the filter cartridges (6) from one side, **characterised in that** the ash discharge jacket (15) extends from the support collectors (7) of the one storey to the support collectors (7) of the other storey and is connected with these and that in the centre of each storey a space in which the conical section (14) of the ash discharge jacket (15) goes over is left free of support collectors (7).

2. Device according to claim 1, **characterised in that** the cylindrical section (13) of the ash discharge jacket (15) surrounds the filter cartridges (6) of a storey from the outside and that the conical section (14) tapers upwardly and projects into the central opening (24) formed in the space, which is kept free of support collectors (7), in the centre of the storey disposed thereabove.

3. Device according to claim 1, **characterised in that** the cylindrical section (13) of the ash discharge jacket (15) surrounds the filter cartridges (6) of a storey from the inside and that the conical section (14) widens upwardly and extends up to the outwardly disposed boundary of the support collectors (7) in the storey disposed thereabove.

4. Device according to one of claims 1 to 3, **characterised in that** the cylindrical section (13) and the conical section (14) of the ash discharge jacket (15) are interconnected by way of a displacing device.

5. Device according to one of claims 1 to 4, **characterised in that** the cylindrical section (13) of the uppermost storey is connected with the wall or the cover (27) of the filter container (10).

## Revendications

1. Dispositif d'épuration de gaz, de préférence chaud, chargé de poussière, à l'aide de bougies filtrantes (6) en céramique fermées d'un côté qui sont placées les unes au-dessus des autres sur plusieurs étages à l'intérieur d'un récipient filtrant (10) et raccordées à des collecteurs supports (7) disposés à une certaine distance latérale les uns des autres, les bougies filtrantes (6) d'un étage étant séparées des bougies filtrantes (6) de l'étage disposé dessus par une enveloppe d'évacuation des cendres (15) qui est constituée d'un tronçon cylindrique (13) et d'un tronçon conique (14) et qui entoure les bougies filtrantes (6) d'un côté, **caractérisé en ce que** l'enveloppe d'évacuation des cendres (15) s'étend des collecteurs supports (7) d'un étage jusqu'aux collecteurs supports (7) de l'autre étage et est raccordée à celui-ci et **en ce que**, au centre de chaque étage, il reste un espace libre de collecteurs supports (7) dans lequel arrive le tronçon conique (14) de l'enveloppe d'évacuation des cendres (15).

2. Dispositif selon la revendication 1, **caractérisé en ce que** le tronçon cylindrique (13) de l'enveloppe d'évacuation des cendres (15) entoure extérieurement les bougies filtrantes (6) d'un étage et **en ce que** le tronçon conique (14) s'amincit vers le haut et fait saillie dans l'ouverture médiane (24) qui est formée dans l'espace libéré des collecteurs supports (7) au centre de l'étage disposé au-dessus.

3. Dispositif selon la revendication 1, **caractérisé en ce que** le tronçon cylindrique (13) de l'enveloppe d'évacuation des cendres (15) entouré intérieurement les bougies filtrantes (6) d'un étage et **en ce que** le tronçon conique (14) s'élargit vers le haut et s'étend jusqu'à la délimitation extérieure des collecteurs supports (7) dans l'étage disposé au-dessus.

4. Dispositif selon l'une des revendications 1 à 3, **caractérisé en ce que** le tronçon cylindrique (13) et le tronçon conique (14) de l'enveloppe d'évacuation des cendres (15) sont raccordés l'un à l'autre par un raccord de déplacement.

5. Dispositif selon l'une des revendications 1 à 4, **caractérisé en ce que** le tronçon cylindrique (13) de l'étage supérieur est raccordé à la paroi ou au couvercle (27) du récipient filtrant (10).
